# EUROPÄISCHE PATENTSCHRIFT

(11) **EP 1 866 089 B1**
(45) Veröffentlichungstag und Bekanntmachung des Hinweises auf die Patenterteilung: **05.09.2012**
(21) Anmeldenummer: 06722579.7
(22) Anmeldetag: 02.03.2006
(51) Int. Cl.: B01L 3/00, B01D 17/04

(54) **MIKROFLUIDVORRICHTUNG ZUR SEPARATION VON EMULSIONEN**
MICROFLUID DEVICE FOR SEPARATING EMULSIONS
DISPOSITIF MICROFLUIDIQUE POUR SEPARER DES EMULSIONS

(30) Priorität: 24.03.2005 DE 102005013916
(43) Veröffentlichungstag der Anmeldung: 19.12.2007
(60) Teilanmeldung: 10156893.9
(73) Patentinhaber: Leibniz-Institut für Polymerforschung Dresden e.V., 01069 Dresden (DE)
(72) Erfinder: IONOV, Leonid, 01187 Dresden (DE); SYDORENKO, Olexander, 01069 Dresden (DE); STAMM, Manfred, Professor, 01705 Freital (DE); MINKO, Sergiy, 01069 Dresden (DE)
(74) Vertreter: Sperling, Thomas
(86) Internationale Anmeldenummer: PCT/DE2006/000422
(87) Internationale Veröffentlichungsnummer: WO 2006/099836

(56) Entgegenhaltungen:
- WO-A-99/17093
- DE-A1- 19 805 866
- US-A1- 2002 113 009
- S. DANIEL, M.K. CHAUDHURY, J.C. CHEN: "Fast Drop Movements Resulting from the Phase Change on a Gradient Surface" SCIENCE, Bd. 291, 26. Oktober 2001 (2001-10-26), Seiten 633-636, XP002397756

## Beschreibung

Die Erfindung betrifft eine Mikrofluidvorrichtung zur Separation von Emulsionen. Mikrofluidvorrichtungen finden Anwendung auf dem Gebiet der Nanoverfahrenstechnik, wo Flüssigkeitsgemische, wie beispielsweise Emulsionen, in geringsten Mengen in ihre Bestandteile zerlegt werden müssen. Die Erfindung betrifft somit die Realisierung eines neuartigen Prinzips für die Separation von Emulsionen in deren Phasen.

Auf dem Gebiet der Nanoverfahrenstechnik werden Flüssigkeitsströme geringster Volumina mit an sich bekannten verfahrenstechnischen Operationen, wie beispielsweise Trennprozessen, behandelt. Von wachsender Bedeutung sind derartige Anwendungsfälle auf dem Gebiet der chemischen Synthese und der Bioanalytik.
Das Mischen und das Trennen sowie chemische Reaktionen bei sehr kleinem Volumina der Flüssigkeiten erlaubt beispielsweise eine schnellere Analyse und führt zudem zu einer Verringerung des Probenvolumens in der Analytik.

Als Mikrofluidvorrichtungen sind beispielsweise Pumpen im Stand der Technik bekannt. Dabei kann der Fluidtransport mittels verschiedenster Prinzipien erfolgen. Es sind beispielsweise mechanisch wirkende, elektroosmotische, elektrochemische und thermokapillare Prinzipien bekannt, um Fluide zu transportieren. Weiterhin werden fotoinduzierte chemische Reaktionen für das lokale Erzeugen von Benetzbarkeit und die Bewegung von Flüssigkeitstropfen auf Festkörperoberflächen benutzt. Auch elektrische und magnetische Felder werden erfolgreich als treibende Kräfte für den Flüssigkeitsstrom angewendet. Die Veränderung von Druck, Temperatur und der pH-Wert-Wechsel werden beispielsweise als Ventilfunktion in Mikrofluidvorrichtungen verwendet.

Gleichfalls im Stand der Technik sind Prinzipien zur Trennung nicht mischbarer Flüssigkeiten, welche als Emulsionen vorliegen, in Mikrofluidvorrichtungen bekannt. Siehe z.B. die US 2002/0113009.

Die Aufgabe der vorliegenden Erfindung besteht darin, eine Mikrofluidvorrichtung zur Verfügung zu stellen, welche einen einfachen Aufbau und keine mechanisch bewegten Teile aufweist. Als Triebkraft für den Trennprozess soll deshalb ein nicht mechanisches Wirkprinzip zum Einsatz gelangen.

Die Aufgabe wird erfindungsgemäß mit einer Mikrofluidvorrichtung nach dem Gegenstand des unabhängigen Vorrichtungsanspruchs gelöst.

Die Konzeption der Erfindung besteht darin, dass eine Gradientenschicht in der Mikrofluidvorrichtung vorgesehen wird, welche einen Gradienten auf der Oberfläche in Bezug auf die Oberflächeneigenschaften aufweist, wobei dieser Gradient die treibende Kraft für die Trennung der Phasen der Emulsion ist.

Diese Konzeption wird durch ein Verfahren umgesetzt, welches die Herstellung derartiger Gradientenschichten für Mikrofluidvorrichtungen gestattet.

Eine erfindungsgemäße Ausgestaltung einer Mikrofluidvorrichtung zur Separation von Emulsionen besteht aus zwei gegenüberliegenden und zueinander beabstandeten Begrenzungsflächen mit einem Bereich für den Emulsionseintritt sowie einem Bereich für den Austritt für eine erste Phase der Emulsion und einem Bereich für den Austritt für eine zweite Phase der Emulsion. Nach der Konzeption der Erfindung weist mindestens eine Begrenzungsfläche eine Gradientenoberfläche auf, deren Oberflächeneigenschaften einen Gradienten entlang einer Achse der Trennstrecke der Emulsion besitzt, wobei die Oberflächeneigenschaften derart gewählt sind, dass die Trennung der Phasen der Emulsion bewirkt wird.

Nach einer Ausgestaltung der Erfindung ist die Einströmrichtung der Emulsion am Emulsionseintritt orthogonal zur Achse der Trennstrecke der Emulsion angeordnet.

Die Mikrofluidvorrichtung weist mindestens eine Begrenzungsfläche mit einer Gradientenoberfläche mit insbesondere folgendem Schichtaufbau auf:
a) ein Silicium-Wafer als Substrat,
b) eine Schicht aus Polyglycidylmethacrylat (PGMA) oder 3-Glycidoxypropyltrimethoxysilan (GPS) mit einer Dicke von ca. 1,5 nm,
c) eine Schicht aus carboxylterminiertem Polystyren (PS-COOH) und
d) eine Schicht aus carboxylterminiertem Poly(2-vinylpyridin) (P2VP-COOH) mit einer Dicke von ca. 500 nm, wobei die Konzentration der Schicht c) aus PS-COOH entlang der Trennstrecke einen Gradienten aufweist.

Die Begrenzungsflächen sind nach einer Ausgestaltung der Erfindung parallel zueinander beabstandet, wobei eine sich verringernde oder erweiternde Beabstandung die Trenneigenschaften zusätzlich verbessern kann.

Die Begrenzungsflächen weisen bevorzugt einen Abstand von einem Millimeter bis drei Millimetern auf.

Vorteilhaft wird eine erfindungsgemäße Mikrofluidvorrichtung derart ausgebildet, dass die Begrenzungsflächen horizontal angeordnet sind und mittels Seitenflächen miteinander verbunden werden und dass der beziehungsweise die sich ausbildenden Kanäle eine Breite von drei Millimetern, eine Höhe von zwei Millimetern und eine Länge von 50 Millimetern aufweisen.

Konzeptionsgemäß wird die Erfindung in besonders vorteilhafter Weise realisiert, wenn die Gradientenoberfläche mehrere N Gradienten aufweist und die Mikrofluidvorrichtung demzufolge N + 1 Austritte für die separierten Phasen einer Emulsion aus mehr als zwei Phasen besitzt.

Alternativ zur bereits angeführten Ausgestaltung der Mikrofluidvorrichtung ist nach einer weiteren Ausgestaltung die Begrenzungsfläche mit der Gradientenoberfläche aus mehreren Glaskapillaren von jeweils 1 Millimeter Durchmesser ausgebildet. Der Schichtaufbau im Inneren, jeder, Glaskapillare ist dabei folgendermaßen ausgestaltet:
a) Kapillarwand aus Glas als Substrat,
b) eine Schicht aus Polybutylacrylat (PBA) mit einer Dicke von ca. 1,5 nm,
c) eine Schicht aus PS-COOH und
d) eine Schicht aus P2VP-COOH mit einer Dicke von ca. 500 nm, wobei die Konzentration der Schicht c) aus PS-COOH entlang der der Trennstreche den Gradienten aufweist.

Eine derartige Mikrofluidvorrichtung wird aus mehreren Glaskapillaren gebildet, welche parallel zueinander auf einem Träger angeordnet sind, wobei der Gradient orthogonal zur Kapillarachse in Richtung der Achse der Trennstrecke ausgebildet ist. Dies bedeutet, dass die einzelnen Kapillaren eine weitgehend homogene Oberfläche aufweisen, jedoch zueinander einen Gradienten in der Oberflächeneigenschaft besitzen.

Ein bevorzugtes Verfahren zur Herstellung von Gradientenoberflächen ist eines, bei dem
- A: ein Silicium-Wafer als Substrat gereinigt wird,
- B: eine Schicht von PGMA oder GPS mittels Spin-Coating aus einer Lösung von 0,01 % in Methylketon auf dem Substrat aufgebracht wird,
- C: eine Schicht aus PS-COOH aus einer 2 %igen Lösung in Toluen mittels Spin-Coating über eine Stunde auf der PGMA-Schicht abgeschieden wird,
- D: eine Schicht aus P2VP-COOH mittels Spin-Coating auf der PS-COOH-Schicht abgeschieden wird.

In Verfahrensschritt
- A: wird der Silicium-Wafer
- A1: in einem Ultraschallbad über 30 Minuten behandelt und anschließend
- A2: in einer Mischung von 3 : 1 Volumenteilen Schwefelsäure und Wasserstoffperoxid über eine Stunde behandelt, wonach
- A3: der Silicium-Wafer mit destilliertem Wasser gewaschen wird.

In Verfahrensschritt
- B: wird das eingesetzte PGMA
- B1: mittels freier Radikalpolymerisation aus Glycidylmethacrylat in Methylethylketon bei 60 °C erzeugt, wobei
- B2: Azobisisobutyronitril (AIBN) als Initiator für die Polymerisation eingesetzt wird und dass
- B3: das PGMA durch das Ausfällen der Methylethylketonlösung in Diethylether gereinigt wird.

Nach Verfahrensschritt
- B: wird das überschüssige PGMA mittels Soxhlet-Extraktion in Toluen über drei Stunden entfernt.

In Verfahrensschritt
- C: wird ein Gradient in der PS-COOH-Schicht durch die örtlich gezielte, in Richtung des Gradienten ansteigende Erhitzung des Substrats mit den Schichten von 90 °C bis 130 °C erzeugt.

Nach Verfahrensschritt
- D: wird das Substrat mit den Schichten über acht Stunden bei 150°C erhitzt wird und anschließend das überschüssige PS-COOH mittels Soxhlet-Extraktion in Tetrahydrofuran (THF) über vier Stunden entfernt.

Alternativ zu dem vorangehend beschriebenen Verfahren wird ein Verfahren zur Herstellung von Gradientenoberflächen vorteilhaft ausgebildet, bei dem
- A: eine Glaskapillare als Substrat gereinigt wird,
- B: eine Schicht von PGMA mittels Chemisorption aus einer Lösung von 0,1 % in Butanon-2 innerhalb von fünfzehn Minuten auf dem Substrat aufgebracht wird,
- C: eine Schicht aus PBA aus einer 1 %igen Lösung auf der PGMA-Schicht abgeschieden wird,
- D: eine Schicht aus P2VP-COOH mittels Spin-Coating auf der PS-COOH-Schicht abgeschieden wird.

Nach Verfahrensschritt
- B: wird das überschüssige PGMA mittels Spülung mit Butanon-2 entfernt.

In Verfahrensschritt
- C: wird ein Gradient in der PBA-Schicht durch die örtlich gezielte, in Richtung des Gradienten ansteigende Erhitzung des Substrats mit den Schichten von 90 °C bis 130 °C erzeugt.

Nach Verfahrensschritt
- D: wird das Substrat mit den Schichten über acht Stunden bei 150 °C erhitzt wird und anschließend das überschüssige PS-COOH mittels Soxhlet-Extraktion in THF über vier Stunden entfernt.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: Prinzipdarstellung einer Mikrofluidvorrichtung mit Gradientenschicht mit einem Silicium-Wafer als Substrat,
- Fig. 2:: Prinzipdarstellung einer Mikrofluidvorrichtung mit Gradientschicht mit einer Glaskapillare als Substrat.

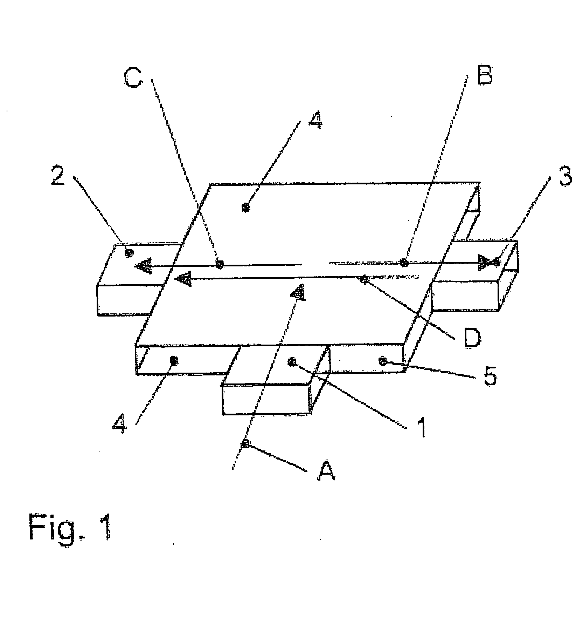

Das Schema der Separation wird in Figur 1 dargestellt. Die Gradientenoberfläche auf dem Substrat besitzt einen eindimensionalen Gradienten entlang der Achse der Trennstrecke D. Die Trennstrecke ist zusammengesetzt aus den Strömungsachsen B und C der Phasen der Emulsion, wobei die Richtung der Strömungsachsen B und C voneinander verschieden sind, im dargestellten Fall von entgegengesetzter Richtung.

Der Gradient weist auf einer Seite, beispielsweise am Austritt 2, ein Minimum und auf der anderen Seite, beispielsweise am Austritt 3, ein Maximum einer Oberflächeneigenschaft der Gradientenschicht auf. Dabei ändert sich der Gradient quantitativ in Bezug auf eine Strömungsachse B entgegen der Strömungsrichtung und in Bezug auf die andere Strömungsachse C mit der Strömungsrichtung entlang der Trennstrecke D. Eine derartig modifizierte Oberfläche wird im Sinne der Erfindung als Gradientenschicht bezeichnet.
Als Gradient werden alternativ oder kumulativ konzeptionsgemäß die Ladung, die Benetzbarkeit bzw. der Kontaktwinkel oder andere Eigenschaften von Oberflächen benutzt, wobei auch Kombinationen dieser Eigenschaften erfindungsgemäß anwendbar sind.

Beispielhaft wird die Wirkungsweise der Erfindung nachfolgend beschrieben. Eine Emulsion von zwei nicht miteinander mischbaren Flüssigkeiten wird in die Mikrofluidvorrichtung am Emulsionseintritt 1 aufgegeben. Der Gradient der Oberflächeneigenschaften wirkt als treibende Kraft für die Bewegung der flüssigen Phasen der einzelnen Komponenten B und C. Jede Phase strömt in Richtung der vorgegebenen Änderung der freien Energie der Oberfläche. Die Phasen der Emulsion haben einen unterschiedlichen Charakter und in der Wechselwirkung mit der Gradientenoberfläche strömen die unterschiedlichen Phasen zu den entgegengesetzten Enden der Gradientenoberfläche und werden so voneinander getrennt. Die Phase B strömt entlang der Strömungsrichtung B zum Austritt 3, die Phase C strömt entlang der Strömungsrichtung C zum Austritt 2.
Die Mikrofluidvorrichtung wird aus zwei parallel beabstandeten Begrenzungsflächen 4 gebildet, welche horizontal angeordnet sind. Mindestens die untere Begrenzungsfläche 4 ist mit einer Gradientenoberfläche versehen. Bevorzugt sind Seitenflächen 5 zur Bildung eines geschlossenen Behältnisses der Mikrofluidvorfichtung oder zur Bildung von mehreren Kanälen vorgesehen.

Die Konzeption der Erfindung wird gemäß einer dargestellten bevorzugten Ausgestaltung mit einem Gradienten der Benetzbarkeit der Oberflächen realisiert.
Die Aufgabe der Erfindung wird hierbei dadurch gelöst, dass die Emulsion durch den Gradienten an Benetzbarkeit spontan in die einzelnen Tröpfchen der verschiedenen Phasen separiert wird, welche dann in die entgegengesetzten Richtungen infolge des Gradienten transportiert werden.

Als wesentliche Vorteile der Erfindung sind zu nennen, dass die Separation der flüssigen Phasen im Unterschied zu einer Trennung infolge von Schwerkraft bzw. Dichteunterschieden:
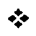 unter Nutzung von Oberflächeneigenschaften, wie Oberflächenspannung, Polarität, Ladung und magnetischen Eigenschaften mit oder ohne Unterstützung von Schwerkraft, erfolgt,
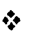 eine effizientere Trennung von kleineren Mengen von Flüssigkeiten ermöglicht, insbesondere bei beispielsweise geringen Gravitationskräften infolge von zu geringen Dichteunterschieden, wodurch die Oberflächenkräfte die mit der Schwerkraft verbundenen Trenneffekte deutlich überlagern,
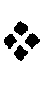 eine bessere und leichtere Kontrolle der Trennrate und der Effizienz der Trennung durch die Gestaltung des Gradienten der Oberflächeneigenschaften mittels des Aufbaus und der Konstruktion der Mikrofluidvorrichtung ermöglicht.

Vorteilhaft wird zur Herstellung der Gradientenoberfläche einer Mikrofluidvorrichtung folgendermaßen vorgegangen:
Carboxylterminiertes Polystyren (PS-COOH, Mn = 45 900 g/mol, Mw = 48 400 g/mol) und carboxylterminiertes Poly(2-vinylpyridin) (P2VP-COOH, Mn = 39 200 g/mol, Mw = 41 500 g/mol). Die Ausgangsstoffe werden synthetisiert durch eine ionische Polymerisation.

Das Polyglycidylmethacrylat (PGMA) (Mn = 84 000 g/mol) wurde synthetisiert durch eine freie Radikalpolymerisation auf Glycidylmethacrylat. Die Polymerisation wurde ausgeführt in Methylethylketon (MEK, VWR) bei 60 °C. Azobisisobutyronitril (AIBM) wurde verwendet als Initiator der Polymerisationsreaktion. Das erhaltene Polymer wurde gereinigt durch mehrfache Ausfällung des Methylethylketons Lösung in Diethyläther.

Als Substrat wird ein polierter Einkristallsilicium-Waver mit 100 Orientierung verwendet. Der Wafer wird zunächst gereinigt, in einem Ultraschallbad für 30 Minuten und danach in heißer Piranhalösung, bestehend aus 3:1 Volumenteilen Schwefelsäure und 30 %igem Wasserstoffperoxid, behandelt. Die Mischung reagiert sehr kräftig mit organischen Lösungsmitteln und sollte mit Vorsicht angewandt werden. Die Reinigung erfolgt über eine Stunde, wonach mehrfach mit destilliertem Wasser nachgewaschen wird.

Danach wird eine dünne Schicht von PGMA in der Größenordnung von 1,5 nm ± 0,1 nm mittels Spin-Coating aus einer 0,01 %igen Lösung von Methylethylketon auf dem Substrat aufgebracht. Danach wird der Film von PS-COOH mittels Spin-Coating aus einer 2% igen Lösung in Toluen aufgebracht und anschließend über eine Stunde auf einem speziell ausgebildetem Gerüst mit einem eindimensionalen Gradienten der Temperatur von 90 °C auf der einen Seite bis 130 °C auf der anderen Seite ausgesetzt. Die Temperatur ändert sich dabei stetig von 90 °C bis hin zu 130°C entlang der Längserstreckung des Substrates. Der Abstand zwischen den beiden Enden betrug etwa 50 mm. Der Temperaturgradient wurde gemessen unter Verwendung von Thermoelementen, welche in dem Gerüst angeordnet waren. Durch das Aufheizen wurde die Esterifikationsreaktion thermisch ausgelöst, wodurch der Gradient der Dichte der Polystyrenschicht verursacht wurde. Die Temperaturabhängigkeit der Anlagerungskinetik verursacht im konkreten Fall die Ausbildung des Gradienten.

Ein Monolayer von PGMA auf dem Silicium-Wafer dient als makromolekulare Ankerschicht bzw. Verbindungsschicht zwischen dem Polystyren und dem Substrat. Die Epoxylgruppen des PGMA-Ankerlayers reagierten mit dem Ende der Karboxylgruppen der Polystyrenschicht am Kettenende des Polystyrenpolymers. Das nicht anhaftende Polymer wird schließlich durch eine Soxhlet-Extraktion in Toluen über 3 Stunden entfernt.
In einem zweiten Schritt wurde ein Film bzw. eine Schicht von 500 nm Dicke von P2VP-COOH mit Spin-Coating am Ende der Gradienten-Polystyrenschicht aufgebracht. Die am Substrat über die PGMA-Schicht verankerten Polystyrenketten werden auch als Polymerbürste oder Büschel bezeichnet. Der sich ausbildende Film bzw. die Schicht wurde bei 150 °C über 8 Stunden erhitzt, wodurch die Verbindung zum P2VP-COOH hergestellt wurde. Danach wurde das ungebundene P2VP-COOH-Polymer entfernt durch eine Soxhlet-Extraktion in Tetrahydrofuran (THF) über 4 Stunden. Die derart präparierte Gradientenoberfläche von beispielsweise 50 mm x 20 mm mit dem Polymermix von Polystyren (PS) und Poly(2-vinylpyridin) (P2VP) weist einen eindimensionalen Gradienten der Schichtkomposition als Verhältnis von PS zu P2VP entlang der Längsachse der Trennstrecke auf.

Die Mächtigkeit der Polymerschicht wurde mit 633 nm bestimmt. Der Kontaktwinkel als Gradient verändert sich in Abhängigkeit des Anteils von PS von 60° bzw. 70° bis hin zu 20°. Die erfindungsgemäß erhaltene Gradientenoberfläche führt zu einer Separation beispielsweise einer Wasser-Toluenmischung. Die Emulsion von Toluen und saurem Wasser mit einem pH-Wert von 2 wurde injiziert durch den Emulsionseintritt 1 auf die Gradientenoberfläche mit dem Gradienten des PS/P2VP-Verhältnisses und der damit verbundenen Änderung des Kontaktwinkels. Auf einer Länge der Trennstrecke von ca. 5 cm erfolgte die Separation der Phasen. Nach der Aufgabe der Emulsion begannen die Flüssigkeiten sich zu separieren und in entgegengesetzte Richtungen entlang der Strömungsachsen der Phasen B und C zu strömen. Das Toluen floss auf die Seite mit dem größeren Verhältnis des hydrophoben Polystyrens, während das Wasser auf die Seite mit der hydrophilen P2VP-Verteilung floss.

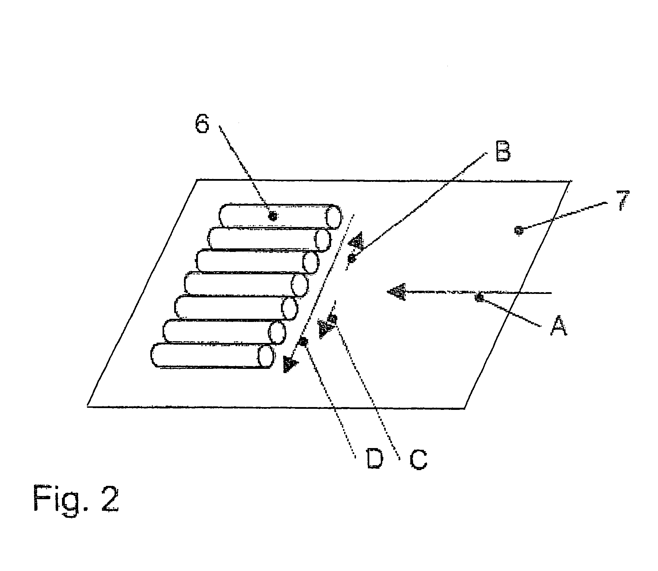

In Figur 2 ist eine weitere Ausgestaltung der Erfindung dargestellt. Dabei sind auf einem Träger 7 Glaskapillaren 6 mit einem Durchmesser von einem Millimeter orthogonal zur Achse der Trennstrecke D angeordnet und im Inneren mit einer Gradientenoberfläche ausgestattet. Die zu separierende Emulsion wird an der Stirnseite der Kapillaren aufgegeben und die einzelnen Phasen werden dann von den Kapillaren mit der entsprechenden Gradientenoberfläche aufgenommen und abgeleitet. Die Phasen sind mit unterschiedlichem Separierungsgrad an den distalen Stirnseiten der Kapillaren abnehmbar, wobei der Separierungsgrad zu den außen liegenden Kapillaren hin zunimmt.

### LISTE DER BEZUGSZEICHEN

- 1: Emulsionseintritt
- 2: Austritt der Phase C
- 3: Austritt der Phase B
- 4: Begrenzungsflächen
- 5: Seitenflächen
- 6: Glaskapillare
- 7: Träger

- A: Strömungsrichtung Emulsion
- B: Strömungsrichtung Phase B
- C: Strömungsrichtung Phase C
- D: Achse der Trennstrecke

## Patentansprüche

1. Mikrofluidvorrichtung zur Separation von Emulsionen, bestehend aus zwei gegenüberliegenden und zueinander beabstandeten Begrenzungsflächen (4) mit einem Bereich für den Emutsionseintritt (1) sowie einem Bereich für den Austritt (2) für eine erste Phase der Emulsion und eine Bereim für den Austritt (3) für eine zweite Phase der Emulsion, **dadurch gekennzeichnet, dass** mindestens eine Begrenzungsfläche (4) eine durch eine Gradientenschicht gebildete Gradientenobsrfläche aufweist, deren Oberflächeneigenschaften einen Gradienten entlang einer Achse (D) der Trennstrecke der Emulsion in der Mikrofluidvorrichtung aufweist, wobei sich die Achse (D) zwischen dem Austritt (2) für die erste Phase und dem Austritt (3) für die zweite Phase der Emulsion erstreckt, und wobei die Oberflächeneigenschaften derart gewählt sind, dass die Trennung der Phasen der Emulsion bewirkt wird.

2. Mikrofluidvorrichtung nach Anspruch 1, **dadurch gekennzeichnet, dass** die Einströmrichtung der Emulsion am Emulsionseintritt (1) orthogonal zur Achse der Trennstrecke (D) der Phasen angeordnet ist.

3. Mikrofluidvorrichtung nach Anspruch 1 oder 2, **dadurch gekennzeichnet, dass** die Begrenzungsfläche (4) mit Gradientenoberfläche einen Schichtaufbau aufweist aus:
a) einem Silicium-Wafer als Substrat,
b) einer Schicht aus Polyglycidylmethacrylat (PGMA) oder Glycidoxypropyltrimethoxysilan (GPS) mit einer Dicke von ca. 1,5 nm,
c) einer Schicht aus carboxylterminiertem Polystyren (PS-COOH) und
d) einer Schicht aus carboxylterminiertem Poly(2-vinylpyridin) (P2VP-COOH) mit einer Dicke von ca. 500 nm, wobei
die Konzentration der Schicht c) aus carboxylterminiertem Polystyren (PS-COOH) entlang der Trennstrecke einen Gradienten aufweist.

4. Mikrofluidvorrichtung nach einem der Ansprüche 1 bis 3, **dadurch gekenntzeichnet,** dass die Begrenzungsflächen (4) parallel zueinander beabstandet sind.

5. Mikrofluidvorrichtung nach einem der Ansprüche 1 bis 4, **dadurch gekennzeichnet, dass** die Begrenzungsflächen (4) einen Abstand von einem Millimeter bis drei Millimetern aufweisen.

6. Mikrofluidvorrichtung nach einem der Ansprüche 1 bis 5, **dadurch gekennzeichnet, dass** die Begrenzungsflächen (4) horizontal angeordnet sind und mittels Seitenflächen (5) miteinander verbunden werden und dass der sich ausbildende Kanal eine Breite von drei Millimetern eine Höhe von zwei Millimetern und eine Länge von 50 Millimetern aufweist..

7. Mikrofluidvorrichtung nach einem der Ansprüche 1 bis 6, **dadurch gekennzeichnet, dass** die Gradientenoberfläche mehrere N Gradienten aufweist und dass N + 1 Austritte (2, 3) für die separierten Phasen vorgesehen sind:

8. Mikrofluidvorrichtung nach Anspruch 1 oder 2, **dadurch gekennzeichnet, dass** die Begrenzungsfläche (4) mit der Gradientenoberfläche aus mehreren Glaskapillaren (6) von jeweils einem Millimeter Durchmesser ausgebildet ist und jeweils einen Schichtaufbau im Inneren der Glaskapillare aufweist aus:
a) der Kapillarwand aus Glas als Substrat,
b) einer Schicht aus Polybutylacrylat (PBA) mit einer Dicke von ca. 1,5 nm,
c) einer Schicht aus carboxylterminiertem Polystyren (PS-COOH) und
d) einer Schicht aus carboxylterminiertem Poly(2-vinylpyridin) (P2VP-COOH) mit einer Dicke von ca. 500 nm, wobei
die Konzentration der Schicht c) aus carboxylterminiertem Polystyren (PS-COOH) entlang der Trennstrecke den Gradienten aufweist.

9. Mikrofluidvorrichtung nach Anspruch 8, **dadurch gekennzeichnet, dass** die mehrere Glaskapillaren (6) auf einem Träger (7) vorgesehen und parallel zueinander auf einer Ebene angeordnet sind, wobei der Gradient orthogonal zur Kapillarachse ausgebildet ist.

## Claims

1. A microfluid device for separating emulsions, consisting of two opposed and mutually distanced boundary surfaces (4) with an area for the emulsion entry (1) as well as an area for the exit (2) for a first phase of the emulsion and an area for the exit (3) for a second phase of the emulsion, **characterised in that** at least one boundary surface (4) has a gradient surface formed by a gradient layer, the surface properties of said gradient surface having a gradient along an axis (D) of the path of separation of the emulsion in the microfluid device, the axis (D) extending between the exit (2) for the first phase and the exit (3) for the second phase of the emulsion, and the surface properties being selected in such a way that the phases of the emulsion are separated.

2. The microfluid device according to claim 1, **characterised in that** the direction of inflow of the emulsion at the emulsion entry (1) is arranged orthogonal to the axis of the path of separation (D) of the phases.

3. The microfluid device according to claim 1 or 2, **characterised in that** the boundary surface (4) having a gradient surface has a layered structure formed from:
a) a silicon wafer as a substrate;
b) a layer of polyglycidyl methacrylate (PGMA) or glycidoxypropyltrimethoxysilane (GPS) having a thickness of approximately 1.5 nm;
c) a layer of carboxyl-terminated polystyrene (PS-COOH); and
d) a layer of carboxyl-terminated poly(2-vinylpyridine) (P2VP-COOH) having a thickness of approximately 500 nm,
the concentration of the layer c) of carboxyl-terminated polystyrene (PS-COOH) having a gradient along the path of separation.

4. The microfluid device according to one of claims 1 to 3, **characterised in that** the boundary surfaces (4) are distanced parallel to one another.

5. The microfluid device according to one of claims 1 to 4, **characterised in that** the boundary surfaces (4) have a distance of one millimetre to three millimetres.

6. The microfluid device according to one of claims 1 to 5, **characterised in that** the boundary surfaces (4) are arranged horizontally and are interconnected by means of side faces (5), and **in that** the channel formed has a width of three millimetres, a height of two millimetres, and a length of 50 millimetres.

7. The microfluid device according to one of claims 1 to 6, **characterised in that** the gradient surface has a plurality of gradients N, and **in that** N + 1 exits (2, 3) are provided for the separated phases.

8. The microfluid device according to claim 1 or 2, **characterised in that** the boundary surface (4) comprising the gradient surface is formed from a plurality of glass capillaries (6), each measuring one millimetre in diameter, and in each case has a layered structure within the glass capillary formed from:
a) a capillary wall made of glass as a substrate;
b) a layer of polybutylacrylate (PBA) having a thickness of approximately 1.5 nm;
c) a layer of carboxyl-terminated polystyrene (PS-COOH); and
d) a layer of carboxyl-terminated poly(2-vinylpyridine) (P2VP-COOH) having a thickness of approximately 500 nm,
the concentration of the layer c) of carboxyl-terminated polystyrene (PS-COOH) having the gradient along the path of separation.

9. The microfluid device according to claim 8, **characterised in that** the plurality of glass capillaries (6) are provided on a carrier (7) and are arranged mutually parallel over a plane, the gradient being formed orthogonal to the capillary axis.

## Revendications

1. Dispositif microfluidique pour la séparation d'émulsions, consistant dans deux surfaces de délimitation (4) opposées et écartées l'une de l'autre avec une zone pour l'entrée de l'émulsion (1) ainsi qu'une zone pour la sortie (2) d'une première phase de l'émulsion et une zone pour la sortie (3) d'une deuxième phase de l'émulsion, **caractérisé en ce qu'**au moins une surface de délimitation (4) comporte une surface de gradients formée par une couche de gradients dont les caractéristiques de surface présentent un gradient le long d'un axe (D) du trajet de séparation de l'émulsion dans le dispositif microfluidique, l'axe (D) s'étendant entre la sortie (2) pour la première phase et la sortie (3) pour la deuxième phase de l'émulsion et les caractéristiques de surface étant choisies de sorte à provoquer la séparation des phases de l'émulsion.

2. Dispositif microfluidique selon la revendication 1, **caractérisé en ce que** la direction d'affluence de l'émulsion dans l'entrée pour l'émulsion (1) est disposée de manière orthogonale par rapport à l'axe du trajet de séparation (D) des phases.

3. Dispositif microfluidique selon la revendication 1 ou 2, **caractérisé en ce que** la surface de délimitation (4) avec surface à gradient comporte une structure en couches composée :
a) d'une tranche de silicium en tant que substrat,
b) d'une couche en méthacrylate de polyglycidyle (PGMA) ou en glycidoxypropyl-triméthoxysilane (GPS) d'une épaisseur d'env. 1,5 nm,
c) d'une couche en polystyrène carboxyterminé (PS-COOH) et
d) d'une couche en poly(2-vinylpyridine)carboxyterminée (P2VP-COOH) d'une épaisseur d'env. 500 nm,
la concentration de la couche c) en polystyrène carboxyterminé (PS-COOH) présentant un gradient le long du trajet de séparation.

4. Dispositif microfluidique selon l'une quelconque des revendications 1 à 3, **caractérisé en ce que** les surfaces de délimitation (4) sont écartées à la parallèle l'une de l'autre.

5. Dispositif microfluidique selon l'une quelconque des revendications 1 à 4, **caractérisé en ce que** les surfaces de délimitation (4) présentent un écart d'un millimètre à trois millimètres.

6. Dispositif microfluidique selon l'une quelconque des revendications 1 à 5, **caractérisé en ce que** les surfaces de délimitation (4) sont disposées à l'horizontale et **en ce qu'**on les relie les unes aux autres au moyen de surfaces latérales (5) et **en ce que** le canal qui se créé présente une largeur de trois millimètres, une hauteur de deux millimètres et une longueur de 50 millimètres.

7. Dispositif microfluidique selon l'une quelconque des revendications 1 à 6, **caractérisé en ce que** la surface de gradients présente plusieurs gradients N et **en ce que** N + 1 sorties (2, 3) sont prévues pour les phases séparées.

8. Dispositif microfluidique selon la revendication 1 ou 2, **caractérisé en ce que** la surface de délimitation (4) avec la surface à gradients est conçue à partir de plusieurs capillaires en verre (6) d'un diamètre de un millimètre chacun et présente chaque fois une structure en couches à l'intérieur des capillaires en verre, composée :
a) de la paroi en verre des capillaires, en tant que substrat,
b) d'une couche en polybutylacrylate (PBA) d'une épaisseur d'env. 1,5 nm,
c) d'une couche en polystyrène carboxyterminé (PS-COOH) et
d) d'une couche en poly(2-vinylpyridine)carboxyterminée (P2VP-COOH) d'une épaisseur d'env. 500 nm,
la concentration de la couche c) en polystyrène carboxyterminé (PS-COOH) présentant un gradient le long du trajet de séparation.

9. Dispositif microfluidique selon la revendication 8, **caractérisé en ce que** les plusieurs capillaires en verre (6) sont prévus sur un support (7) et sont disposés à la parallèle l'un de l'autre sur un plan, le gradient étant formé de manière orthogonale par rapport à l'axe des capillaires.
